# EUROPEAN PATENT APPLICATION

(11) **EP 0 591 880 A2**
(43) Date of publication of application: **13.04.1994**
(21) Application number: 93115958.6
(22) Date of filing: 02.10.1993
(51) Int. Cl.: H04N 7/08, H04N 7/087

(54) **Receiver circuit of teletext signals with separate acquisition and visualisation functions**

(30) Priority: 06.10.1992 IT TO920810
(71) Applicant: SELECO S.p.A., I-33170 Pordenone (IT)
(72) Inventor: Leonarduzzi, Antonio, I-33030 Maiano (UD) (IT)
(74) Representative: Dini, Roberto, Dr. Ing.

(57) **Abstract**

The present invention relates to a receiver circuit of teletext signals, with data acquisition and visualisation functions; the main characteristic of the invention consists in that the circuit provides a separation between the acquisition function and the function of visualisation, in order to consent the acquisition and the memorisation of data in real time.

## Description

The present invention relates to a receiver circuit of teletext signals, with data acquisition and visualisation functions.

It is known that in different European countries, from among which Italy, systems are in use (known generically with the English word teletext, and more specifically designated Televideo in Italy and Videotext in Germany) that allow for the transmission, together with the normal television signals, of additional information, inserted in the video signal (under the form of encoded digital signals) in some of the free horizontal lines during the vertical return period.

These encoded signals, upon command of the user, are detected by an opportune decoder circuit, known and normally realised by means of monolithic integrated circuits, inserted within the circuits of the television, in order to consent the visualisation on the television screen for one of the transmitted information pages, containing text or graphics.

The pages normally transmitted are of several hundred, grouped by subject (for example: latest news: pages. 110-125, sport: pages. 150-162, politics: pages. 210-222, games: pages. 315-345, etc.); on the first page (page 100) the general index of subjects is usually contained, and in the successive pages the sub-indexes for every subject, with the relative page numbers.

The user must, each time that he wishes to receive a certain page, press in sequence three numerical buttons in order to form the three digit number of the searched page; the decoder begins to receive the pages while transmitted, one after the other, from the broadcaster; as soon as that distinguished by the sequence of digits generated by the user is transmitted, the decoder provides to acquire it.

However if it occurs that the page distinguished by formulated sequence of digits is not in reality transmitted; then in this case the decoder waits for an indefinite time for its arrival; in practice the decoder remains blocked until the user notices and provides to modify the order.

This drawback in particular occurs with apparatuses equipped with the so-called 'next' button that automatically provides to generate, when said button is pressed, the number of the three successive digits to that of the page shown in that moment.

An apparatus of this type is for example that described in the Italian Patent Application N. 67521 /A86.

It is known from German Patent Application N. 36 22 308 to memorise the numbers of the pages whilst being received, in order to have available a list of the transmitted pages. However in such application it is not described how to keep updated the situation of the memory, inasmuch that it is known that pages are continually added or removed from the cycle, neither how the actual memorisation is managed. In other words the description of such application is extremely insufficient, in that it results in being practically impossible to realise the proposed system, due to the lack of sufficient explanations.

Another problem verified in the use of teletext systems is that of the so-called rolling pages, or folder pages; these multiple pages are pages in which the contents of the screen is changed every 15-20 seconds; a rolling page can count up to 20 subpages; the consultation of these multiple pages is extremely troublesome, given that often one does not have time to read the page before it changes; it is possible stop the rotation, freezing the page on the screen, but when the page is "unlocked" it is not the successive page that appears but that which in the meantime is being transmitted, usually distant one or two pages from that desired; it is useless to linger on the problem, well known to all the experts of the sector and to the users of the system.

It has been proposed to memorise several of the selected pages from those receivable, and/or to memorise the sub-pages of a rolling page as soon as it is selected; but the problem consists in that the memories normally used provide for a rather reduced number of pages to be memorised (8 or 16), insufficient for memorising at least some of the single pages (primary) and the sub-pages (rotary) of at least one rolling page.

Furthermore, also increasing the capacity of the memory, the known circuits, also of the multibank type, require an amount of time being too long for the acquisition, the memorisation and the visualisation of the pages.

The aim of the present invention is that of illustrating a receiver circuit of teletext signals that overcomes the described drawbacks, finally making the use of teletext a possible and practical thing.

For allowing such aims the present invention has as its subject a receiver circuit of teletext signals, with data acquisition and visualisation functions, characterised in that the circuit provides a separation between the acquisition function and the function of visualisation, in order to consent the acquisition and the memorisation of data in real time.

Further aims and advantages of the present invention will result in being clear from the detailed description that follows and from the annexed drawings, supplied purely as an explanatory and non-limiting example, wherein:
figure 1 represents the block diagram of the acquisition and visualisation circuit of the receiver according to the invention;
figure 2 represents the image shown on the screen of the receiver according to the invention.

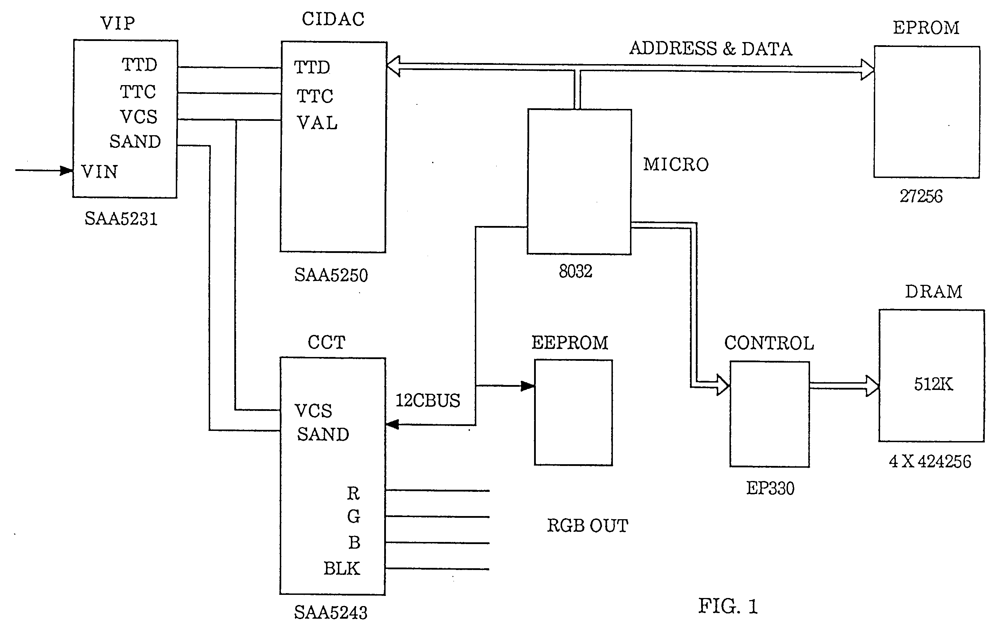

In figure 1 to the left the video signal the input (VIN) is noted; an integrated circuit VIP (teletext Video Processor) for example of the type SAA5231; such circuit extracts teletext data from the video signal, regenerates the teletext clock and synchronises the visualisation of the text to the television synchronism signals.

The circuit VIP is connected from one side to a circuit CIDAC (Interface for data acquisition and control) and from another to a circuit CCT (Computer Controlled teletext); the circuit CIDAC (that obtains data from the received television signal and provides control and address signals for the memorisation in a memory buffer) is for example of the type SAA5250, while the circuit CCT (that executes all the digital logic functions of a teletext decoder for a television signal with 625 lines) is for example of the type SAA5243.

The circuit CCT is connected from a side through a I2C bus to a microcontroller circuit (MICRO), for example of the type 8032, that manages the system; and from another part supplies the R, G, B signals in output to the colour amplifiers for the visualisation of imagine on the picture-tube.

The circuit CIDAC is connected through an address and data bus with both the MICRO, and with a memory DRAM (dynamic read-write memory) of a great capacity (512KB, realised by means of 4 memories of the type 424256), and with a memory EPROM of the type 27256, which contains the FIRMWARE management of the receiver circuit. The DRAM serves to memorise the acquired teletext pages, as will be explained later.

The MICRO in turn is also connected both with the DRAM and with a programmable logic circuit (CONTROL), of type EPLD (Electrically Programmable Logic Device) EP330, in turn connected with the DRAM, of which carries out the management of the control and updating signals.

Finally the MICRO is connected, via I2C bus to a non volatile read-write memory (EEPROM), where the various selectable configurations are memorised.

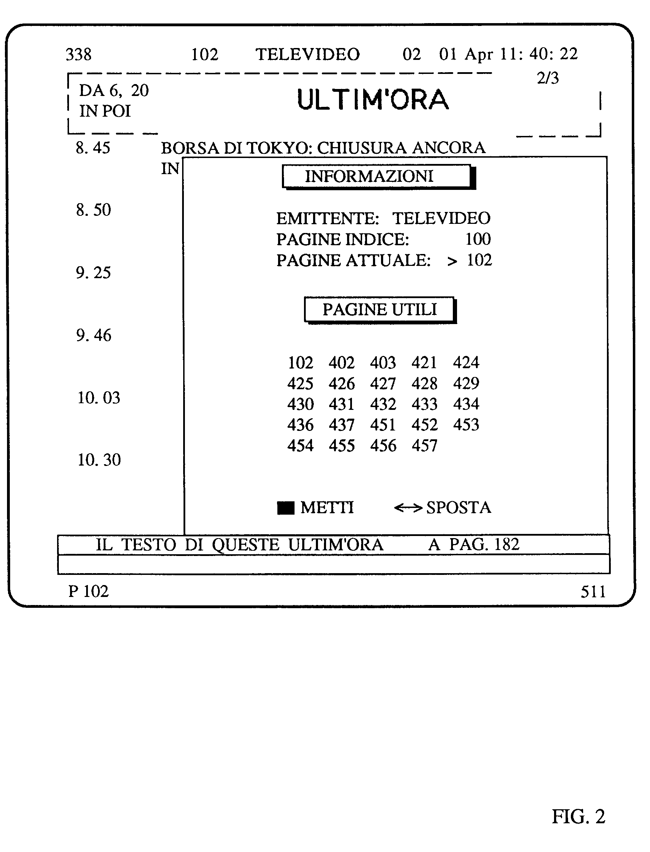

In figure 2 a normal televideo page is visible (the page of the latest news); the line 0 will never roll (situation that is verified with normal known decoders), because in the case a non-existent page is requested this state will be made clear with a message on the last line; thus, in the upper left, in green, the number of the page transmitted in that moment is visible, and, next to this, the number of the selected page. In the lower right hand corner a number corresponding to the quantity of memorised pages is visible; in the lower left hand corner the number of the page shown is visible, next to which is the number of the sub-pages (if the page is multiple), in different colours: those memorised in green, that shown in yellow, those not memorised in white.

In the central part of the page, but deplaced to the right and towards the bottom, in order to leave visible a part consisting of the teletext page, the guide menu for helping the user in the use of the receiver is displayed.

The menu is thus articulated:
title:
INFORMATION;
BROADCASTER: TELEVIDEO;
INDEX PAGE: 100;
ACTUAL PAGE: 102;
in following the under listed information is also given:
USEFUL PAGES
102, ........ (from hereon follows a schedule of the selected multiple pages by the user as interesting, up to a maximum of 35, the sub-pages of which are automatically memorised in the memory DRAM).

Below to the left appears a small-square (representing the corresponding button of the remote control) next to which the message "ADD" if the page shown is not included in the schedule, and "REMOVE" if on the other hand the page shown is included in the schedule. So the user can modify the schedule of "USEFUL PAGES" according to his desires.

It is possible to memorise different multiple page schedules depending on the teletext received ( i.e. according to the broadcaster).

To the right however two arrows are represented, pointing both to the left and to the right, next to which is the message MOVE; the two arrows represent two corresponding buttons of the remote control, that serve for browsing through the sub-pages.

The menu guide is obtained writing in the shown page, present in the CCT memory, only in the interested area of the menu, and leaving unaltered the remaining contents of the page; when the user wants to eliminate the menu, for seeing the complete page, this is withdrawn from the DRAM and rewritten in its entirety in the display memory of the CCT.

The functioning of the described circuit is the following:
The CIDAC carries out the teletext function "front end"; its functioning is reduced to the fact of receiving serial data and to convert it in a parallel 8 bits format; this operation is synchronous, i.e. besides the data signal a clock signal is also present, and is activated in contemporaneity of two events.

The CIDAC, before starting to memorise the data extracted from the televideo lines, must, in the presence of a suitable validation signal, recognise a particular code present on the third byte of the Televideo line, called "Framing code"; from this moment the televideo data is memorised in a FIFO type memory, successively read by the MICRO.

Every televideo line contains 42 bytes, of which only 40 are useful for the visualisation of the page; to the initial state the MICRO verifies whether in said memory FIFO of the CIDAC data is present; every Televideo line corresponds to a line shown in the page; the first two bytes read by the MICRO refer to the MRAG, that indicates to which magazine the line belongs and to which line of the page it must be associated.

Before starting to put the data in the DRAM the MICRO must wait to receive the line 0, "Header Row", in which further information is contained, protected by the 4 bits Hamming code, and containing information relative to the page, to the sub-pages and to the attributes; the MICRO must decode them, verifying their correctness and try to recover, if possible, the information in case of data affected by errors.

All lines received successively, with the same magazine indication, will be associated to the page, obtained previously by line 0, and thus until the reception of a new line 0 with indications of a page different from the previous.

Every time that the MICRO receives a new page, line 0, it verifies whether this is already present in the DRAM.

The work quantity that the MICRO must carry out is considerable and as a result considerable is the complexity of the FIRMWARE, contained in the EPROM, optimised for carrying out all the operations in the shortest time possible, for ensuring the discharge of the FIFO of the CIDAC always before it is covered by new data, thus avoiding the loss of the reception control.

The table of the pages, made and updated in real time, contains all the information relative to all of the 565 pages that can be memorised in the DRAM; every page is described in 4 bytes, for a total of 2260 bytes (565x4).

Byte 1 describes the situation of the page; it contains the information relative to: Page display, Sub Page, Liked Page, Page Looking for, Page Free, Counter Page Out.

Byte 2 contains the page number (tens and units).

Byte 3 contains the information relative to the sub-page and store.

Finally byte 4 contains the information relative to: Serial Magazine, Display Inhibit, Int.. Sequence, Update, No Header, Subtitle, News flash , Erase Page.

Some information will be given here relative to some of the data, which consents the management of the memory and the visualisation in an optimal way.

Bits 0, 1 and 2 of the first byte "Counter Page Out" form a counter that is zeroed each time that the update of a page is received, while it is incremented if during a cycle the page is not received; when this counter goes into overflow, i.e. after that eight consecutive cycles the page is not updated, bit 3 is automatically set, i.e. the "Page free" bit; this, if set (i.e. placed to 1) indicates that the space in the DRAM dedicated to this page is available, while if it is zeroed it means that in this space a page has been memorised. Thus when a page is not received for 8 consecutive cycles, it is considered to be no longer present in the cycle and the relative space is made available for a new page.

The wait of 8 cycles before cancelling the page represents a protection measure against the presence of disturbances in the signal, that can cause an incorrect decoding and/or the insertion of the page in a mistaken address of the magazine. Bit 4 of the first byte "Page looking for" indicates that the MICRO is waiting to receive the page.

The FIRMWARE of the card is divided, substantially, in two processes, one of page acquisition, activated by interrupt, and one of visualisation, activated by commands generated by the user; when the user requires a page to be displayed, the MICRO, after having controlled, scanning the table of the pages, that in the DRAM, copies the page are present from the DRAM to the memory of the CCT, which displays it on the screen.

If the page contains sub-pages, that must be directly displayed whilst being received, there has to be an exchange information mechanism between the acquisition process and that of visualisation, so as that the second knows when first has received a new sub-page; this takes place through the "Page looking for" bit, which is zeroed the moment in which the page is displayed; the acquisition process sets on the other hand to 1 this bit upon receiving a new sub-page; testing this bit, the visualisation process in this way knows when a new sub-page has arrived, and will thus provide to copy it from the DRAM to the memory of the CCT.

Bit 5 of the first byte "Liked Page" is set the moment in which for the first time a page is received, if this is between those listed in the "useful pages"; from this moment, all the successive sub-pages are memorised on different spaces of the DRAM and for each of them there is a different description in the table of the pages.

Bit 6 of the first byte "Sub Page" has the same functioning as the previous, with the difference being that it is the process of visualisation to set it when the page is shown; the result being that the acquisition process will also memorise in different spaces all the sub-pages of the page displayed.

While the sub-pages memorised with the bit "Liked Page" will never be cancelled from the DRAM, the space utilised by those memorised with the "Sub Page" bit can be reused for new pages, with the condition that the page is no longer in the condition of visualisation.

If in the table of the pages neither the "Liked Page" bit nor that of the "Sub Page" are set the sub-pages while being received will always be memorised in the same space of the DRAM, gradually covering the previous pages.

Byte 4 collects all the decoded attributes from line 0.

In particular, the first bit (bit O) "Erase Page" establishes that before storing the page in the DRAM, the relative space must be cancelled, writing in the DRAM, in the place of all the 920 characters of the page, the "SPACE" code; given that this process would require an excessive amount of time, with the risk to losing control of the process, only the first byte of each line is substituted with a particular code.
when the page must be displayed, the routine that transfers the page from the DRAM to the memory of the CCT, if it finds as first byte of a line the aforementioned particular code, instead of copying data from the DRAM, it writes directly in the memory of the CCT a sequence of 40 "SPACE" characters.

There exists a univocal correspondence between the pointer to the table of pages and the initial pointer to the relative space to the page in the DRAM.

The structure of the DRAM is the following:
- Space for memorising 565 pages, without the line 0: 519800 byte;
- Table of the pages: 2260 byte;
- Space reserved for the data for building the menu and for general use: 2220 byte.

For a total of 524280 byte.

Only a part of the "Video Display Processor" of the CCT is utilised, i.e. that which allows the visualisation of a page, written in the 8KB memory directly managed by the CCT itself, by way of RGB and "blank" signals that it provides and that are connected, through the "emitter follower" to the RGB and "blank" inputs of the television.

The interface with the MICRO takes place through I2C bus.

Of the 8 one-page memory banks available, (each page occupies IKB), only the first memory bank is utilised; every time that a new page must be displayed, the process of visualisation copies the data present in the DRAM, through I2C bus, in the first memory bank of the CCT, which, if the user has selected the televideo mode, directly displays the page.

Commands managed by the CCT are:
- TV/TELETEXT mode;
- page of single/double height;
- detection of hidden texts.

These commands are sent by the MICRO the moment in which the user presses on the remote control buttons corresponding to these functions.

The duty of updating the information present in the corners of the pages displayed, is entrusted to the visualisation process, during the moment in which the acquisition process is not active.

In particular this information is the following:
a) indication of the transmitted page instant for instant, in the upper left hand corner;
b) the hour, shown in the upper right;
c) the total number of acquired pages, in the lower right hand corner.

The first two segments of information are extracted from line 0; this is memorised and updated in continuation, in the memory of the MICRO by the acquisition process; the typical structure of line 0 is the following:
101 TELEVIDEO Lu 27 Apr 15:20:35
An appropriate routine of the visualisation process reads the first three characters, relative to the page, and writes them, through I2C bus, in the first locations of the page of the CCT; it then reads the 8 characters relative to the hour and writes them in the last locations of the first line of the page of the CCT; continually repeating this activity, as a result the rotation effect of the page and the updating of the hour is obtained.

This operation, realised here in a software mode, is, in the standard Televideo decoder, executed in a hardware mode by the CCT.

With the same criteria the information c) is written in the lower left hand corner of the page; the number is incremented, in the memory of the MICRO, by the acquisition process, every time that a new page is received, up to the maximum value of 565. The data that serves for generating the menu is memorised in a non volatile memory (EEPROM); the interface with the MICRO is carried out through I2C bus.

Different menus can be memorised in the EEPROM for allowing the user to select a different page list for every broadcaster that provides a teletext service; upon turning on the television, the MICRO awaits the reception of a line 0, where the information relative to the broadcaster is contained; if this does not take place within 5 seconds, the MICRO decides that the selected program does not provide teletext and, when the user will enter this mode, a completely blank page will appear with a message written in the upper section "NO TELETEXT".

If on the other hand a line 0 is received, the MICRO withdraws from this the name of the broadcaster and will control whether in the EEPROM the relative menu has already been memorised; if it is present, it will copy all the data from the EEPROM in the DRAM, in the space reserved for the data for constituting the menu; this data is memorised in the EEPROM in a compressed form for limiting the cost, and are decompressed the moment in which they are copied in the DRAM.

The visualisation of the menu is entrusted to the visualisation process; in the page displayed, present in the memory of the CCT, the MICRO provides to write only in the area reserved for the menu, leaving unaltered the remaining contents of the page. Besides the data, present in the DRAM, the MICRO also utilises a suitable mask, containing control characters (commands for changing the colour of the back ground), the fixed writing and graphic characters, on which mask the data itself has been inserted.

When the user wishes to eliminate the menu, for viewing the complete page, this is withdrawn from the DRAM and rewritten in the page of the CCT.

In summarising, the Televideo data, extracted from the video signal by the circuit VIP, is decoded by the CIDAC, placed in a 2KB buffer, and read by the MICRO, that interprets it (Hamming code etc.), rebuilds the page and memorises it in the memory DRAM; the memorisation is carried out by utilising a slight data compression algorithm: line 0 is in fact removed (that is the same for all the pages, excluding the page number); in this way 1/24 of space in the memory is saved; 565 pages can be memorised this way in the DRAM.

The visualisation is carried out by the CCT, in parallel and independently from the acquisition and decoding functions; acquisition and memorisation take place in real time; this means that in approximately 16 seconds (time of the cycle) all of the 400 primary pages transmitted are acquired and memorised; the operation initiates from the selection of a relative television channel, independently from the fact of a teletext function being called or not.

For the sub-pages, as has been seen, a list of 35 "USEFUL PAGES" exists chosen by the user: for the pages contained in said list all the sub-pages are acquired (there is a capacity of approximately 5 sub-pages per folder). The time necessary is around 80 seconds. Thus with slightly more than a minute from the selection of a channel, the user has available 565 pages that can be browsed through without a rush, be it forwards or backwards without any problems.

The normal "+" and "-" keys are used for browsing through the primary pages, while the two arrowed keys are used for browsing the sub-pages; both the "+" and "-" keys and the arrowed keys are equipped with the "repeat" function therefore keeping the keys depressed the pages rapidly pass before the users eyes. It is clear that if a page is not present in the cycle, it is not even present in the memory DRAM, and therefore the functioning of the "+" and "-" keys produces the display of the successive (or previous) page actually existing in the cycle, and it does not carry out a pointless search of a page that does not exist.

The characteristics of the receiver subject of the present invention result in being clear from the present invention.

From the present description the advantages of the receiver subject of the present invention also result in being clear.

In particular they consist in that:
- the acquisition and memorisation of the page is carried out in real time and makes available all the primary pages for the user in approximately 16 seconds from selecting a channel;
- even a number consisting of sub-pages (approximately 175), that can be selected by the user according to his specific interests, are memorised in slightly more than a minute;
- the consulting of pages is extremely simple, quick and does not cause any problems whatsoever.

It is clear that numerous variations are possible by the skilled man, to the receiver described as an example, without however departing from the novelty principles inherent in the invention.

## Claims

1. Receiver circuit of teletext signals, with data acquisition and visualisation functions, characterised in that the circuit provides a separation between the acquisition function and the function of visualisation, in order to consent the acquisition and the memorisation of data real time.

2. Receiver circuit of teletext signals, according to claim 1, characterised in that it comprises a circuit for the acquisition and control of data (CIDAC) and a circuit for the visualisation of pages (CTT) separated and acting in parallel.

3. Receiver circuit of teletext signals, according to claim 2, characterised in that it comprises a microcontroller (MICRO), connected both to said circuit for the acquisition and control of data (CIDAC) and to said circuit for the visualisation of pages (CTT), and also to a high capacity read write memory (DRAM) for the memorisation of the pages acquired.

4. Receiver circuit of teletext signals, according to claim 3, characterised in that said high capacity read write memory has a capacity of such to contain more than 500 televideo or teletext pages.

5. Receiver circuit of teletext signals, according to claim 3, characterised in that in said memory (DRAM) the pages are memorised utilising a data compression algorithm.

6. Receiver circuit of teletext signals, according to claim 5, characterised in that before the memorisation in said memory (DRAM) the line 0 is removed from the pages.

7. Receiver circuit of teletext signals, according to claim 1, characterised in that the acquisition and memorisation of the pages is initiated as soon as a television channel is selected, independently from the fact whether a teletext function has been selected or not.

8. Receiver circuit of teletext signals, according to claim 7, characterised in that all the primary pages transmitted in a cycle are acquired and memorised in real time in the memory (DRAM).

9. Receiver circuit of teletext signals, according to claim 8, characterised in that the numbers of determined multiple pages, selected differently for each television channel, by the user, are memorised, in an appropriate non volatile memory (EEPROM), and that the sub-pages of said multiple pages are also acquired and memorised in real time in said memory (DRAM).

10. Receiver circuit of teletext signals, according to claim 9, characterised in that it generates and displays, upon request, a menu guide for the selection, memorisation and use of said memorised sub-pages (fig. 3).

11. Receiver circuit of teletext signals, according to claim 10, characterised in that said menu guide is displayed together with the teletext page actually chosen, but covering it only in part, thus permitting the user to see the result of the choices carried out.

12. Receiver circuit of teletext signals, according to claim 9, characterised in that the memorised sub-pages can be browsed through directly in two senses by means of two appropriate keys (arrowed keys).

13. Receiver circuit of teletext signals, with data acquisition and visualisation functions, characterised in that the circuit provides a command organ equipped with two pairs of keys ("+", "-"; arrowed keys) , a first pair ("+", "-") of keys for selecting the visualisation of the primary pages and a second pair (arrowed keys) for selecting the visualisation of the sub-pages (rolling pages).

14. Receiver circuit of teletext signals, according to claim 3, characterised in that said microcontroller (MICRO), provides for memorising in said read write memory (DRAM) a table of pages, made up and updated in real time, that contains all the information relative to all of the pages that can be memorised in the read write memory (DRAM).

15. Receiver circuit of teletext signals, according to claim 14, characterised in that in said table of pages every page is described with 4 bytes.

16. Receiver circuit of teletext signals, according to claim 15, characterised in that the first of said 4 bytes contains a counter of three bits counter (Counter Page Out) that is zeroed each time that an update of a page is received, while it is incremented if during a cycle the page is not received and that when the counter goes into overflow, i.e. after eight consecutive cycles the page is not updated, another bit is automatically placed to 1 (Page free) of said first byte and that as a consequence the page is considered to be no longer present in the cycle and the relative space is made available for another page.

17. Receiver circuit of teletext signals, according to claim 15, characterised in that in the first of said 4 bytes a bit is contained (Page Looking For) which is zeroed the moment in which the subpage is displayed and placed to 1 upon receiving a new subpage.

18. Receiver circuit of teletext signals, according to claim 3, characterised in that said microcontroller (MICRO), provides for reconstructing a complete page for display, withdrawing a part of said memory (DRAM) and a part of the incoming signal.

19. Receiver circuit of teletext signals, according to claim 3, characterised in that said Firmware that controls the microcontroller is substantially divided in two processes, one of page acquisition, activated from interrupt, and one of visualisation, activated by commands given by the user.

20. Receiver circuit of teletext signals, according to claim 15, characterised in that in the first of said 4 bytes a bit is contained (Liked Page) which is placed to 1 the moment in which a page is received for the first time, if this is from those listed in said Useful Pages, and that, from this moment, all the sub-pages are memorised on different spaces of the read write memory (DRAM), and for each of which exists a different description in the table of pages.

21. Receiver circuit of teletext signals, according to claim 15, characterised in that in the first of said 4 bytes a bit is contained (Sub Page) which is placed to 1 the moment in which the page is displayed, that, from this moment, all of the sub-pages of the page displayed are memorised on different spaces of the read write memory (DRAM), and that said further bit (Sub Page) is zeroed as soon as the page is no longer displayed and the space in the memory utilised by the relative sub-pages memorised is once again made available for new pages.

22. Receiver circuit of teletext signals, according to claim 15, characterised in that in the fourth of said 4 bytes a bit is contained (Erase Page) that, when placed to 1, it makes sure that the first byte of each line is substituted with a particular code, in order that, when the page is to be displayed, the routine that transfers the page of the read write memory (DRAM) to the memory of the CCT, if it finds said particular code as first byte of a line, instead of copying the data from the read write memory (DRAM), it directly writes in the memory of the CCT a sequence of 40 "SPACE" characters.

23. Receiver circuit of teletext signals, according to claim 10, characterised in that in said appropriate non volatile memory (EEPROM), various menus can be memorised for allowing the user to select a different group of desired pages for every broadcaster that provides a teletext service.

24. Receiver circuit of teletext signals, according to claim 23, characterised in that upon turning on the television set, the microcontroller (MICRO) remains in waiting to receive a line 0, where the information relative to the broadcaster is contained; if this does not take place within a determined period (5 seconds), the microcontroller (MICRO) decides that the program selected does not provide teletext and, when the user enters this mode, a completely blank page will appear with a written message (NO TELETEXT).

25. Receiver circuit of teletext signals, according to claim 23, characterised in that upon turning on the television set, the microcontroller (MICRO) remains in waiting to receive a line 0, where the information relative to the broadcaster is contained, and, if a line 0 is received, the MICRO will copy from this the name of the broadcaster and control whether in said non volatile memory (EEPROM) the relative menu has already been memorised and, if it results in being present, it will copy all of the data of the non volatile memory (EEPROM) in the read write memory (DRAM), in the space reserved for data for making up the menu.

26. Receiver circuit of teletext signals, according to claim 23, characterised in that the data relative to the menu is memorised in said non volatile memory (EEPROM) in a compressed form so as to limit its costs, and is decompressed the moment in which it is copied in the read write memory (DRAM).

27. Receiver circuit of teletext signals, with data acquisition and visualisation functions, characterised in that the circuit contains a control unit (MICRO), which upon turning on the television set remains in waiting for receiving a line 0, where the information relative to the broadcaster is contained; if this does not take place within a determined period of time (5 seconds), the microcontroller (MICRO) decides that the selected program does not provide teletext and, when the user enters this mode, a completely blank page will appear with a message (NO TELETEXT).
